# EUROPEAN PATENT APPLICATION

(11) **EP 4 331 968 A1**
(43) Date of publication of application: **06.03.2024**
(21) Application number: 22275121.6
(22) Date of filing: 01.09.2022
(51) Int. Cl.: B63B 25/24, B63B 25/28, B63B 73/60, B63B 73/20, B63B 73/43, B64D 9/00, B60P 7/08, B60P 7/13, B61D 45/00

(54) **TWISTLOCK ALIGNMENT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention provides an alignment device for aligning a corner-casting during installation. The alignment device comprises a body adapted to fit within a corner-casting aperture and to engage with the edges of the aperture with a friction fit, wherein the upper surface of the body comprises a visual guide. A kit and method of installing a corner-casting are also provided.

## Description

### FIELD

The present invention relates to an alignment device for aligning a corner-casting during installation, and a method of installing a corner-casting.

### BACKGROUND

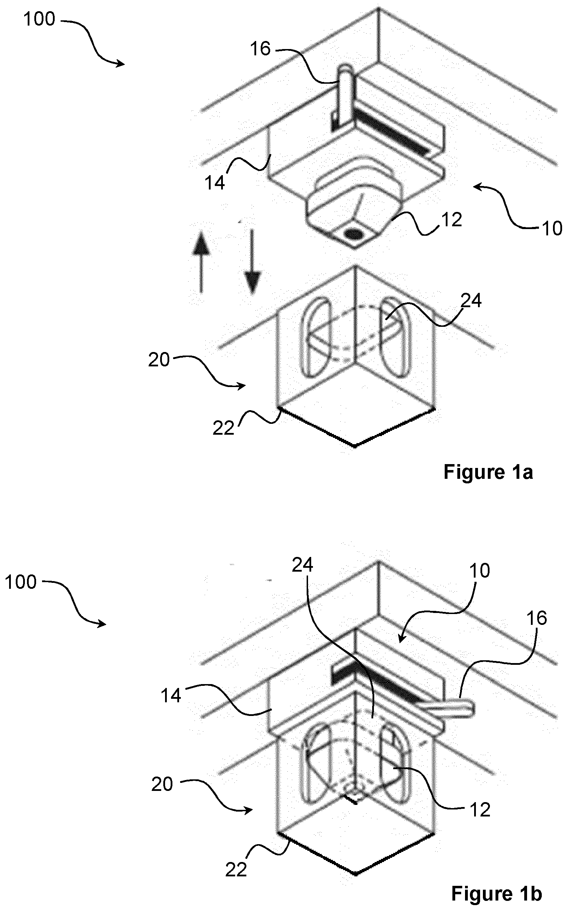

Twistlocks are commonplace features in the field of shipping containers (also known as ISO-containers, freight containers, or intermodal containers). The ISO-container comprises at least one corner-casting (also known as a corner fitting, or twistlock housing), with which the twistlock engages. Connector systems, i.e. a system comprising a twistlock and a corner-casting, form part of the state of the art. They can be used to aid the stacking of shipping containers, or attach shipping containers to flatbed trailers or other handling equipment. A connector system 100 will now be generally described with reference to Figure 1a and Figure 1b. Figure 1a illustrates a typical connector system in the unlocked (and unattached) configuration, while Figure 1b illustrates a typical connector system in the locked (i.e. connected) configuration.

A twistlock 10 is a device comprising a protrusion 12 having an oval cross-section, which can be rotated about 90 degrees relative to the body 14 of the device. The protrusion 12 engages with a corner-casting 20, which is typically welded or otherwise attached to shipping containers.

Corner-castings 20 comprise a hollow cuboid housing 22, typically made of steel, iron or aluminium. The housing 22 has an aperture 24 arranged on at least one side, with the aperture 24 being rectangular with curved corners. The corners may be so curved that the longitudinal ends of the aperture 24 are curved, such that the aperture 24 is oval. The width of the aperture 24 must not exceed 66 millimetres. In addition, the length of the aperture 24 must not exceed 127 millimetres. Furthermore, the thickness of the housing 22 must fall below 23 millimetres. Twistlocks 10 and corner-castings 20 are defined in ISO 1161:2016.

The protrusion 12 of a twistlock 10 is first inserted through the aperture 24. A switch 16 (i.e. a mechanical lever) is then articulated to rotate the protrusion 12 through 90 degrees to prevent its removal. In other words, in the locked configuration, the longitudinal axis of the aperture 24 is orthogonal to the longitudinal axis of the protrusion 12.

To properly secure a shipping container, a twistlock 10 should be engaged with a corner-casting 20 on all four corners on one of the container's sides. Alignment and spacing of corner-castings 20 (and twistlocks 10, where they are fixed in position) is therefore key.

It is known to fixedly install corner-castings 20 on the deck of a ship or flatbed truck. Alignment of each fixed corner-casting 20 such that they can be matched with corner-castings 20 on the corners of a shipping container is currently achieved using a ruler or other measurement device.

Therefore, there is a need for a means to time-efficiently position corner-castings 20 in a connector system 100, which also reduces burden on the installer.

### SUMMARY

According to a first aspect of the present invention, there is provided an alignment device for aligning a corner-casting during installation, comprising:
a body adapted to fit within a corner-casting aperture and to engage with the edges of the aperture with a friction fit,
wherein the upper surface of the body comprises a visual guide.

Advantageously, the alignment device provides a means to cheaply, quickly and easily align a plurality of corner-castings such that ISO-containers having twistlocks installed at their lower corners can later be connected to each of them.

Peripheral edges of the body may be defined by a plurality of protuberances extending radially away from the centre of the body.

The guide may be cruciform. The guide may alternatively comprise two or more parallel lines. The guide may comprise a single line.

The longitudinal and transverse members of the guide intersect at the centre of the upper surface.

The guide may comprise a channel engraved into the upper surface of the body.

The body may be formed of a first material and the guide may be formed of a second material, the second material being a contrasting colour to the first material.

The alignment device may comprise at least one flange extending from the upper surface of the body for engaging with an outer surface of a housing of the corner-casting to prevent the alignment device falling through the aperture. The lower surface of the at least one flange may be co-planar with the upper surface of the body. The at least one flange may be adjustable in height.

The alignment device may comprise a plurality of discrete flanges extending radially away from the upper surface of the body.

The alignment device may comprise at least one hole extending through the body from the upper surface to a lower surface.

The body may be about 127 mm long and about 66 mm wide.

According to another aspect of the present invention, there is provided a kit comprising a corner-casting and an alignment device according to the first aspect, wherein the corner-casting comprises a housing and at least one aperture disposed in a side wall of the housing for receiving a twistlock.

According to another aspect of the present invention, there is provided a method of installing a corner-casting, comprising:
removing a section at least the size of a corner-casting from a deck of a platform, to form a cavity;
locating a corner-casting in the cavity;
inserting an alignment device according to any one of claims 1 to 10 into an aperture in a housing of the corner-casting;
moving the corner-casting until a template installed on the deck aligns co-axially with the visual guide of the alignment device; and
securing the corner-casting in place within the cavity.

The template may comprise at least one laser beam. The template may comprise two laser beams arranged orthogonally to each other. The template may comprise at least one piece of string.

The template may comprise a plurality of vertices defining a rectangle, the rectangle being of the same dimensions as an ISO-container.

The method may comprise repeating the steps of the method for four corner-castings arranged at the vertices of a rectangle, which are aligned with each other using the template.

The method may comprise removing the alignment device and inserting a twistlock into the aperture of the corner-casting.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent.

### BRIEF DESCRIPTION OF THE FIGURES

Embodiments of the invention will now be described by way of example only with reference to the figures, in which:
Figure 1a is a perspective view of a connector system in an unlocked configuration;
Figure 1b is a perspective view of a connector system in a locked configuration;
Figure 2 is a plan view of inserts according to the present invention installed in a corner-casting;
Figure 3 is a perspective view of an insert according to the present invention; and
Figure 4 is a side view of an insert according to the present invention.

### DETAILED DESCRIPTION

Generally, embodiments relate to an insert which can be used to align a corner-casting 20 within a cavity prior to securing the corner-casting 20 in place on a platform. Twistlocks 10 may then be installed in the corner-castings 20 in order to secure further corner-castings 20 to them. In this way, connector systems 100 for allowing ISO-containers to be fixed to the platform may be quickly and easily installed, for example by retrofitting an existing platform. The corner-castings 20 may be installed at the vertices of a rectangle and aligned with each other. The platform may be a ship, land vehicle such as a truck or trailer, or an aircraft (i.e. the corner-castings may be fitted to the cargo deck of an aircraft).

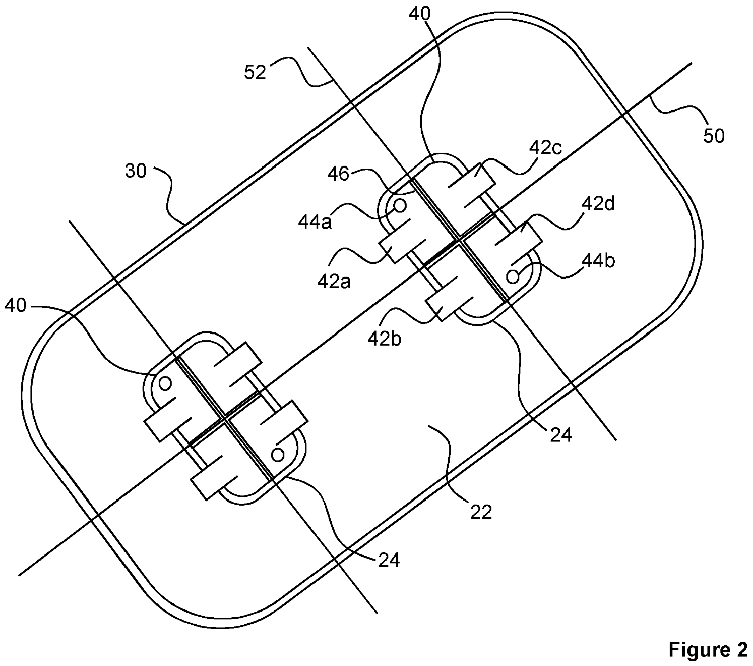

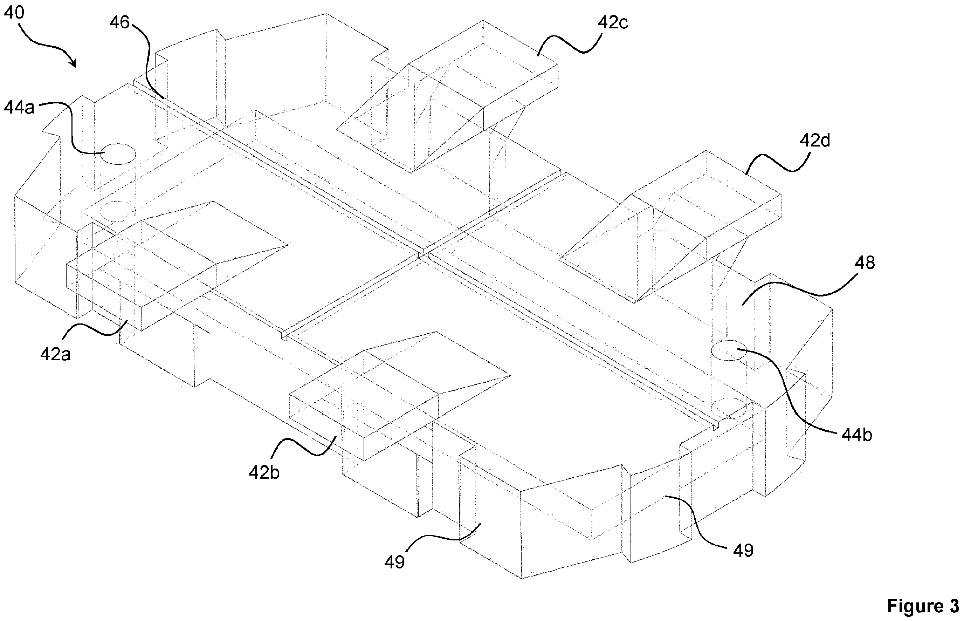

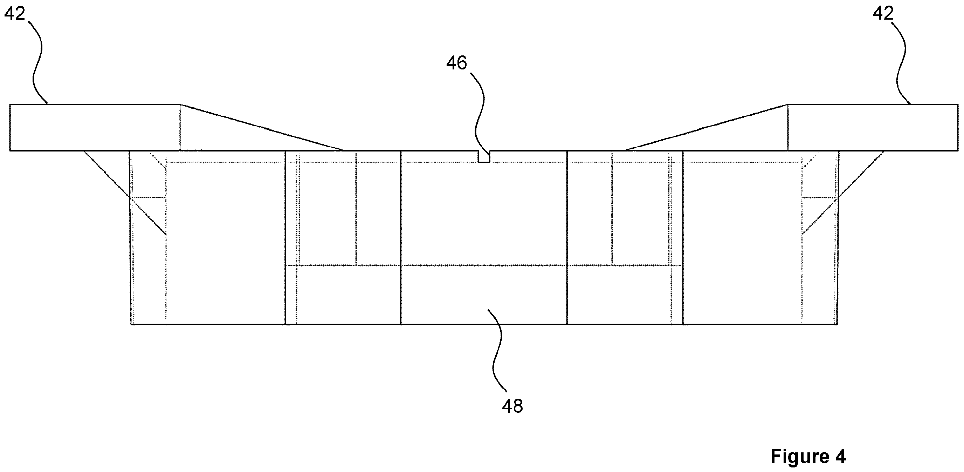

The insert 40 will now be described in detail with reference to Figures 2, 3 and 4.

When installing corner-castings 20 on a platform, for example the deck of a ship or the flatbed of a trailer, it is important that they be aligned with high precision. If they are not, when a protrusion 12 of a first twistlock 10 coupled to an ISO-container is positioned in the aperture 24 of one corner-casting 20, it would not be possible to position a protrusion 12 of a second twistlock 10 coupled to the same ISO-container within the aperture 24 of another (misaligned) corner-casting 20.

In a preferred embodiment, in a first step a cavity 30, larger than the length and width dimensions of the housing 22, is cut into the deck of a ship. For the corner-casting 20 to be arranged flush with the deck to prevent a trip hazard, the cavity 30 should be cut to the same depth as the depth of the housing 22.

In a second step, the corner-casting 20 is then positioned, without fixation, into the cavity 30. The corner-casting 20 may be manoeuvred to some degree within the cavity 30 to allow for accurate alignment.

In a third step, an insert 40 is removably installed into at least one of the apertures 24 on the top side of the housing 22. In the illustrated embodiment, the corner-casting 20 comprises two apertures 24 on the top side of the housing 22, which is a standard configuration. Some corner-castings 20 only have one aperture 24 on the top side of the housing 22, as illustrated in Figure 1a.

The insert 40 is preferably formed using Additive Layer Manufacturing (ALM). Alternatively, the insert 40 may be moulded. The insert 40 may be made of plastic, rubber or metal. Preferably, the insert 40 is made of polylactic acid (PLA).

The body 48 of the insert 40 is suspended in the aperture 24. The plan of the body 48 matches the shape of the aperture 24. A plurality of flanges 42a-d (generally, 42) are arranged to extend from the upper surface of the body 48. These flanges 42 engage with the edges of the aperture 24 to prevent the body 48 falling into the housing 22. While four flanges 48 are illustrated, two extending from each longitudinal side of the body 48, other embodiments may include more or fewer flanges 42. Alternatively, flanges 42 may be arranged to extend from the transverse side of the body 48.

The flanges 42 are arranged such that their lower surface is co-planar with the upper surface of the body 48. Therefore, when the flanges 42 are coupled with the housing 22 surrounding the aperture 24, the upper surface of the body 48 will be co-planar with the housing 22. The flanges 42 may be adjustable in height. A dumpy level may then be used to compare the height of corner-casting 20 against a known level relative to the ship's baseline (where the platform is a ship).

In an alternative embodiment, instead of a plurality of discrete flanges 42, the insert 40 comprises a single elongate flange (i.e. a collar) extending substantially around the perimeter of the upper surface of the body 48. In this way, the flange may engage with the perimeter of the aperture 24, while the body 48 occupies the aperture 24.

The side surfaces of the body 48 are undulating. In other words, the body 48 comprises protuberances 49 in the form of castellations. These enable a friction-fit between the body 48 and the edge of the aperture 24, while also reducing the challenge of removing the insert 40 once so inserted.

The insert 40 comprises two bolt holes 44a, 44b (generally, 44) extending through the body 48, from the upper surface to the lower surface. Bolts may be screwed into one or more of the bolt holes 44, and then lifted to pull the insert 40 out of the aperture 24. Alternatively, instead of bolt holes 44, the insert 40 may comprise holes that are smooth on the inside surface and arranged to receive a hook for engaging with the lower surface of the body 48 such that it can be lifted from the aperture 24.

A first bolt hole 44a is arranged at one end of the insert 40, while a second bolt hole 44b is arranged at the other. The bolt holes 44a, 44b may be arranged on opposite sides of the longitudinal axis of the insert 40.

The body 48 may have a planar lower surface. Alternatively, as illustrated, the lower surface of the body 48 may comprise an indentation extending over the majority of its surface, in order to reduce the amount of material needed to form the insert 40.

The upper surface of the body 48 comprises a guideline 46. In the illustrated embodiment, the guideline 46 comprise an engraved (i.e. etched or excavated) channel. The guidelines 46 takes a cruciform shape. In other words, the guideline 46 extends along the longitudinal axis and transverse axis of the body 48, with orthogonal lines of the guideline 46 intersecting at the centre point of the body 48. Instead of a channel, the guideline 46 may comprise a superficial marking, for example formed by paint. In a preferable embodiment, the guideline 46 is formed by printing a second material on the upper surface of the body 48, the second material having a different colour to that forming the body 48.

A longitudinal string 50 is fixed to the deck of the platform (i.e. the ship), suspended over the insert 40. A transverse string 52, arranged orthogonally to the longitudinal string 50, is also fixed to the deck of the platform and suspended over the insert 40. The longitudinal string 50 and transverse string 52 intersect at roughly the point where the longitudinal axis and transverse axis of the insert 40 meet.

The insert 40 is then rotated within the cavity 30 until one axis of the guideline 46 is arranged co-axially with the longitudinal string 50, and the other axis of the guideline 46 is arranged co-axially with the transverse string 52. This so aligns the corner-casting 20. In other words, the strings 50, 52 act as a template with which to match the guideline 46.

In one embodiment, a pair of parallel longitudinal strings 50 is arranged orthogonally with a pair of transverse strings 52 to define a rectangle. The cavities 30 for the corner-castings 20 are formed at the vertices of this rectangle. The rectangle matches the plan of an ISO-container. Therefore, when the corner-castings 20 are properly aligned in the respective cavities 30 with each other, an ISO-container may installed upon them. An ISO-container is 2.43 meters wide by either 6.06 meters or 12.2 meters long.

In an alternative embodiment, instead of a longitudinal string 50 and a transverse string 52, a longitudinal laser beam and transverse laser beam (i.e. orthogonally-arranged laser beams) may be used to provide a template with which to align the guideline 46. The laser beams may be generated by lasers installed (e.g. fixed) to the deck of the platform.

In a fourth step, the corner-casting 20 is fixed within the cavity 30 in its aligned position. This may be performed by welding the corner-casting 20 in place. The gap between the edge of the cavity 30 and the housing 22 is packed with a filler material, such as rubber, molten metal or weld filament.

In a fifth step, the insert 40 is removed from the apertures 24 so that a protrusion 12 of a twistlock 10 may be inserted within the aperture 24, thereby forming a connector system 100.

The skilled person would understand that the fourth and fifth steps may be reversed in an alternative embodiment.

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on.

Singular references do not exclude a plurality; thus, references to 'a', 'an', 'first', 'second', etc. do not preclude a plurality. In the claims, the terms "comprising" or "including" do not exclude the presence of other elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. An alignment device for aligning a corner-casting during installation, comprising:
a body adapted to fit within a corner-casting aperture and to engage with the edges of the aperture with a friction fit,
wherein the upper surface of the body comprises a visual guide.

2. The alignment device according to claim 1, wherein peripheral edges of the body are defined by a plurality of protuberances extending radially away from the centre of the body.

3. The alignment device according to claim 1 or claim 2, wherein the guide is cruciform.

4. The alignment device according to claim 3, wherein longitudinal and transverse members of the guide intersect at the centre of the upper surface.

5. The alignment device according to any one of the preceding claims, wherein the guide comprises a channel engraved into the upper surface of the body.

6. The alignment device according to any one of claims 1 to 4, wherein the body is formed of a first material and the guide is formed of a second material, the second material being a contrasting colour to the first material.

7. The alignment device according to any one of the preceding claims, comprising at least one flange extending from the upper surface of the body for engaging with an outer surface of a housing of the corner-casting to prevent the alignment device falling through the aperture.

8. The alignment device according to claim 7, comprising a plurality of discrete flanges extending radially away from the upper surface of the body.

9. The alignment device according to any one of the preceding claims, comprising at least one hole extending through the body from the upper surface to a lower surface.

10. The alignment device according to any one of the preceding claims, wherein the body is about 127 mm long and about 66 mm wide.

11. A kit comprising a corner-casting and an alignment device according to any one of the preceding claims, wherein the corner-casting comprises a housing and at least one aperture disposed in a side wall of the housing for receiving a twistlock.

12. A method of installing a corner-casting, comprising:
removing a section at least the size of a corner-casting from a deck of a platform, to form a cavity;
locating a corner-casting in the cavity;
inserting an alignment device according to any one of claims 1 to 10 into an aperture in a housing of the corner-casting;
moving the corner-casting until a template installed on the deck aligns co-axially with the visual guide of the alignment device; and
securing the corner-casting in place within the cavity.

13. The method according to claim 12, wherein the template comprises at least one laser beam.

14. The method according to claim 12 or claim 13, wherein the template comprises a plurality of vertices defining a rectangle, the rectangle being of the same dimensions as an ISO-container.

15. The method according to any one of claims 12 to 14, comprising removing the alignment device and inserting a twistlock into the aperture of the corner-casting.
